# EUROPÄISCHE PATENTSCHRIFT

(11) **EP 3 653 400 B1**
(45) Veröffentlichungstag und Bekanntmachung des Hinweises auf die Patenterteilung: **03.01.2024**
(21) Anmeldenummer: 19208880.5
(22) Anmeldetag: 13.11.2019
(51) Int. Cl.: B60B 21/12, B60C 15/02, B60B 1/00

(54) **REIFENSCHUTZELEMENT**
TYRE PROTECTIVE ELEMENT
ÉLÉMENT DE PROTECTION DE PNEU

(30) Priorität: 16.11.2018 DE 202018005308 U
(43) Veröffentlichungstag der Anmeldung: 20.05.2020
(73) Patentinhaber: RTI Sports GmbH, 56070 Koblenz (DE)
(72) Erfinder: Graeve, Arndt, 56072 Koblenz (DE)
(74) Vertreter: dompatent von Kreisler Selting Werner - Partnerschaft von Patent- und Rechtsanwälten mbB

(56) Entgegenhaltungen:
- US-A- 5 820 709
- US-A1- 2017 291 457

## Beschreibung

Die Erfindung betrifft ein Reifenschutzelement für Fahrradreifen.

Insbesondere zur Verbesserung des Komforts werden Fahrräder vermehrt mit einem geringen Reifendruck der Fahrradreifen gefahren. Dies ist insbesondere bei Fahrradreifen von Mountainbikes häufig der Fall, um die Aufstandsfläche zu vergrößern. Hierbei besteht jedoch die Problematik, dass beim Überrollen von Kanten, scharfkantigen Steinen und dergleichen starke Verformungen des Reifenmantels und ggf. auch des Schlauchs auftreten, wenn es sich nicht um einen schlauchlosen Reifen handelt. Hierbei können die Verformungen derart stark sein, dass hohe Lasten auf die Felgen wirken und ggf. ein Beschädigen der Felgen auftritt. Ferner kann hierbei der Schlauch einer Felge derart eingequetscht werden, dass dieser beschädigt wird (sogenannter Schlangenbiss).

Zur Vermeidung derartiger Beschädigungen ist es bekannt, innerhalb des Mantels ringförmige umlaufende Verstärkungselemente, insbesondere aus einem extrudierten Schaumstoff oder Elastomermaterial, vorzusehen. Hierdurch kann zwar das Risiko der Beschädigungen der Felge und eines ggf. im Mantel angeordneten Schlauchs verringert werden, derartige Schutzvorrichtungen weisen jedoch erhebliche Nachteile auf. Zunächst ist das Gewicht derartiger Schutzvorrichtungen häufig hoch. Des Weiteren wird hierdurch das Volumen innerhalb des Mantels verringert, so dass sich die Federsteifigkeit des gesamten Reifens erhöht bzw. der Komfort verringert. Auch ist die Montage sehr aufwendig. Des Weiteren können aufgrund der Verformungen des Reifens im Betrieb insbesondere durch Reibung des Schutzsystems an Mantel und/oder Schlauch im Inneren Schäden auftreten und damit die Lebensdauer des Reifens herabsetzen. Beschädigungen des Schutzelements sind ferner nicht sichtbar, da dieses innerhalb des Mantels angeordnet ist.

Ein derartiges Reifenschutzelement ist z.B. aus der JP H07 300002 A bekannt.

Ein Reifenschutzelement mit den Merkmalen des Oberbegriffs des Anspruchs 1 ist aus US 5,820,709 bekannt.

Aufgabe der Erfindung ist es, ein einfach zu handhabendes Reifenschutzelement zu schaffen.

Die Lösung der Aufgabe erfolgt erfindungsgemäß durch die Merkmale des Anspruchs 1.

Das erfindungsgemäße Reifenschutzelement für Fahrradreifen weist ein Halteelement zum Verbinden mit einem Felgenhorn einer Fahrradfelge auf. Ferner ist mit dem Halteelement ein Pufferelement verbunden. Das Pufferelement dient zur Druckaufnahme bei einer Verformung des Reifenmantels. Durch die Anordnung des erfindungsgemäßen Reifenschutzelements auf dem Felgenhorn ist somit eine sehr einfache Montage möglich, da das erfindungsgemäße Reifenschutzelement nicht innerhalb des Mantels angeordnet ist. Auch ist ein guter Schutz eines ggf. im Mantel angeordneten Schlauchs gewährleistet, da der Druck besser verteilt wird und auch beim Überfahren von Kanten die Gefahr des Beschädigens des Schlauchs (Schlangenbiss) verringert ist. Des Weiteren weist das erfindungsgemäße Reifenschutzelement den Vorteil auf, dass eine Beschädigung sichtbar ist und das erfindungsgemäße Reifenschutzelement ferner auf einfache Weise ausgetauscht werden kann. Auch erfolgt keine Verringerung des Luftvolumens innerhalb des Mantels, so dass das Luftvolumen vollständig zur Federung/Dämpfung genutzt werden kann. Das Anordnen des erfindungsgemäßen Reifenschutzelements am Felgenhorn ist insbesondere möglich, da moderne Fahrradreifen mit Scheibenbremsen und nicht mehr mit Felgenbremsen ausgestattet sind. Die Außenseite des Felgenhorns muss somit nicht mehr als Bremsfläche freibleiben.

Das erfindungsgemäße Reifenschutzelement weist ein Halteelement mit zwei einander gegenüberliegenden Haltearmen auf.

Diese sind in montiertem Zustand auf der Innenseite bzw. der Außenseite des Felgenhorns angeordnet. Zur Montage ist es somit auf einfache Weise möglich, das Halteelement auf das Felgenhorn aufzustecken. Hierzu ist es nicht unbedingt erforderlich, den Mantel zu demontieren. Vielmehr ist es in bevorzugter Ausführungsform ausreichend, den Luftdruck im Mantel zu verringern, so dass das erfindungsgemäße Reifenschutzelement auf das Felgenhorn aufgesteckt werden kann. Bevorzugt ist es daher insbesondere, dass das Halteelement im Querschnitt U-förmig ausgebildet ist.

Der äußere, in montiertem Zustand an der Außenseite des Felgenhorns angeordnete Haltearm ist hierbei in Längsrichtung des Reifenschutzelements bzw. in Umfangsrichtung des Felgenhorns vorzugsweise durchgehend ausgebildet. Um eine gute Verformung des Halteschutzelements zu ermöglichen, kann der äußere Haltearm auch Einschnitte oder Ausnehmungen aufweisen.

Der innere Haltearm ist ebenfalls durchgehend ausgebildet, kann jedoch vorzugsweise auch mehrteilig ausgebildet sein, um die Montage zu vereinfachen.

Das Pufferelement ist in bevorzugter Ausführungsform derart mit dem Halteelement verbunden oder einstückig mit diesem ausgebildet, dass es in montiertem Zustand auf einer Oberseite des Felgenhorns angeordnet ist. Das Pufferelement ist somit derart angeordnet, dass beim Überfahren von Kanten der sich verformende Mantel des Reifens auf das Pufferelement drückt und eine bessere Kraftverteilung bzw. Kraftübertragung erfolgt.

Vorzugsweise ist das Pufferelement den Haltearmen gegenüberliegend angeordnet, so dass die Haltearme vom Pufferelement wegweisen.

Das Pufferelement kann einstückig mit dem Halteelement ausgebildet sein. Bevorzugt ist es, dass das Pufferelement aus einem anderen, insbesondere weicheren Material als das Halteelement hergestellt ist. Insbesondere kann das Pufferelement aus einem Elastomermaterial hergestellt sein. Das Halte- element ist vorzugsweise aus einem Kunststoffmaterial hergestellt. In besonders bevorzugter Ausführungsform ist es daher möglich, das Halteelement und das Pufferelement gemeinsam beispielsweise in einem Koextrusionsverfahren herzustellen.

Vorzugsweise ist das erfindungsgemäße Reifenschutzelement als ablängbares Endlosband hergestellt. Ein Benutzer kann somit das Endlosband je nach Reifengröße ablängen und entsprechend verwenden. Ggf. sind auf dem Reifenband Markierungen für unterschiedliche Reifengrößen vorgesehen.

Des Weiteren betrifft die Erfindung einen Fahrradreifen mit einer Felge und zwei mit den Felgenhörnern verbundenen, insbesondere auf die Felgenhörner aufgesteckten Reifenschutzelementen wie vorstehend beschrieben. Die Reifenschutzelemente sind vorzugsweise wie vorstehend beschrieben erfindungsgemäß weitergebildet. Ferner kann der Fahrradreifen zusätzlich einen Fahrradmantel und ggf. einen innerhalb des Mantels angeordneten Fahrradschlauch aufweisen.

Zur Montage des Reifenschutzelements wird dieses, wenn es sich um ein Endlosmaterial handelt, zunächst abgelängt und sodann mit dem Felgenhorn verbunden. Hierbei kann ein Verbinden durch Aufstecken erfolgen, insbesondere wenn das Halteelement zwei einander gegenüberliegende Haltearme aufweist. Vor oder nach der Montage der erfindungsgemäßen Reifenschutzelemente können der Mantel und ggf. der innerhalb des Mantels angeordnete Schlauch montiert sein.

Nachfolgend wird die Erfindung anhand einer bevorzugten Ausführungsform unter Bezugnahme auf die anliegende Zeichnung näher erläutert.

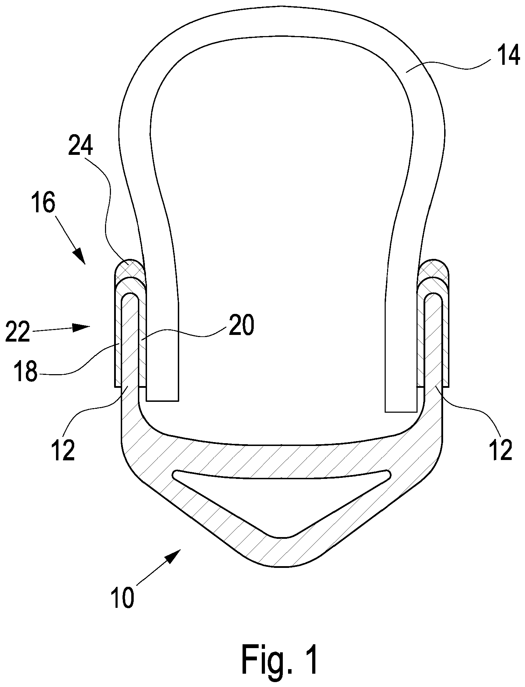

Die Figur zeigt eine schematische Schnittansicht einer bevorzugten Ausführungsform von montierten Reifenschutzelementen.

In der Figur ist schematisch eine Felge 10 dargestellt, die zwei umlaufende Felgenhörner 12 aufweist. Zwischen den Felgenhörnern 12 ist ein Mantel 14 angeordnet, wobei es sich im dargestellten Ausführungsbeispiel um einen schlauchlosen Reifen handelt. Selbstverständlich kann innerhalb des Mantels 14 ein Schlauch angeordnet sein.

Auf die beiden Felgenhörner 12 ist jeweils ein Reifenschutzelement 16 aufgesteckt. Hierzu weist das Reifenschutzelement 16 einen äußeren Haltearm 18 sowie einen inneren Haltearm 20 auf. Die beiden Haltearme sind miteinander verbunden, so dass ein im Querschnitt U-förmiges Halteelement 22 ausgebildet ist. Die beiden Haltearme können durchgehend ausgebildet sein und somit in montiertem Zustand in Seitenansicht ringförmig ausgebildet sein. Auch können zur vereinfachten Montage die Haltearme 18, 20 mehrteilig ausgebildet bzw. mit Schlitzen versehen sein.

In montiertem Zustand ist der äußere Haltearm 18 somit an einer Außenseite und der innere Haltearm 20 an einer Innenseite des Felgenhorns angeordnet.

Ferner ist das Halteelement 22 mit einem insbesondere aus einem elastomeren Material hergestellten Pufferelement 24 verbunden. Das Pufferelement 24 ist in montiertem Zustand an einer Oberseite des Felgenhorns 12 vorgesehen bzw. den beiden Haltearmen 18, 20 des Halteelements 22 gegenüberliegend angeordnet.

Bei dem erfindungsgemäßen Reifenschutzelement handelt es sich insbesondere um ein Endlosband, das zur Montage abgelängt wird. Zur Montage wird das entsprechend der Reifengröße abgelängte Reifenschutzelement vor oder nach der Montage des Mantels 14 auf die beiden Felgenhörner 12 aufgesteckt.

Bei einer Verformung des Mantels 14 wird dieser auf das Pufferelement 24 gedrückt, so dass die Gefahr des Beschädigens des Mantels oder eines innerhalb des Mantels angeordneten Schlauchs verringert ist.

## Patentansprüche

1. Reifenschutzelement für Fahrradreifen, mit
einem Halteelement (22) zum Verbinden mit einem Felgenhorn (12) einer Fahrradfelge (10) und
einem mit dem Halteelement (22) verbundenen Pufferelement (24) zur Druckaufnahme bei einer Verformung eines Reifenmantels (14),
**dadurch gekennzeichnet, dass**
das Halteelement (22) zwei einander gegenüberliegende Haltearme (18, 20) aufweist, die in montiertem Zustand auf einer Innenseite bzw. einer Außenseite des Felgenhorns (12) angeordnet sind,
wobei das Reifenschutzelement als gesondertes Reifenschutzelement, je Felgenhorn (12), ausgebildet ist.

2. Reifenschutzelement nach Anspruch 1, **dadurch gekennzeichnet, dass** das Halteelement (22) einen U-förmigen Querschnitt aufweist.

3. Reifenschutzelement nach Anspruch 1 oder 2, **dadurch gekennzeichnet, dass** das Pufferelement (24) in montiertem Zustand auf einer Oberseite des Felgenhorns (12) angeordnet ist.

4. Reifenschutzelement nach einem der Ansprüche 1-3, **dadurch gekennzeichnet, dass** das Pufferelement (24) den Haltearmen (18, 20) gegenüberliegend angeordnet ist, so dass die Haltearme (18, 20) vom Pufferelement (24) wegweisen.

5. Reifenschutzelement nach einem der Ansprüche 1-4, **dadurch gekennzeichnet, dass** das Pufferelement (24) elastisches Material aufweist.

6. Reifenschutzelement nach einem der Ansprüche 1-5, **dadurch gekennzeichnet, dass** das Reifenschutzelement (16) als ablängbares Endlosband hergestellt ist.

7. Fahrradreifen mit einer Felge (10) und zwei mit den Felgenhörnern (12) der Felge (10) verbundenen, insbesondere auf die Felgenhörner (12) aufgesteckten Reifenschutzelementen (16) nach einem der Ansprüche 1-6.

## Claims

1. A tyre protective element for bicycle tyres, comprising
a holding element (22) for connection with a rim flange (12) of a bicycle rim (10), and
a buffer element (24) connected with the holding element (22) for pressure absorption in the event of a deformation of a tyre casing (14),
**characterized in that**
the holding element (22) comprises two opposite holding arms (18, 20) which are arranged on an inner side and an outer side of the rim flange (12), respectively, in a mounted state,
wherein the tyre protective element is formed as a separate tyre protective element for each rim flange (12).

2. The tyre protective element according to claim 1, **characterized in that** the holding element (22) has a U-shaped cross-section.

3. The tyre protective element according to claim 1 or 2, **characterized in that** the buffer element (24) is arranged on an upper side of the rim flange (12) in a mounted state.

4. The tyre protective element according to any one of claims 1-3, **characterized in that** the buffer element (24) is arranged opposite the holding arms (18, 20) so that the holding arms (18, 20) face away from the buffer element (24).

5. The tyre protective element according to any one of claims 1-4, **characterized in that** the buffer element (24) comprises an elastic material.

6. The tyre protective element according to any one of claims 1-5, **characterized in that** the tyre protective element (16) is manufactured as an endless tape cut to length.

7. A bicycle tyre comprising a rim (10) and two tyre protective element (16) according to any one of claim 1-6, which are connected to the rim flanges (12) of the rim (10), in particular attached on the rim flanges (12).

## Revendications

1. Elément de protection de pneu pour un pneu de bicyclette, comprenant
un élément de maintien (22) pour la fixation sur un rebord de jante (12) d'une jante de bicyclette (10) et
un élément tampon (24) relié à l'élément de maintien (22) et destiné à absorber de la pression lors d'une déformation d'une enveloppe de pneu (14),
**caractérisé en ce que**
l'élément de maintien (22) comprend deux bras de maintien (18, 20) opposés qui sont disposés, en l'état monté, respectivement sur une face intérieure et une face extérieure du rebord de jante (12),
l'élément de protection de pneu étant configuré comme un élément de protection individuel pour chaque rebord de jante (12).

2. Elément de protection de pneu selon la revendication 1, **caractérisé en ce que** l'élément de maintien (22) a une section transversale en forme d'un U.

3. Elément de protection de pneu selon la revendication 1 ou 2, **caractérisé en ce que** l'élément tampon (24) est disposé, en l'état monté, sur une face supérieure du rebord de jante (12).

4. Elément de protection de pneu selon l'une des revendications 1 à 3, **caractérisé en ce que** l'élément tampon (24) est disposé en regard des bras de maintien (18, 20), si bien que les bras de maintien (18, 20) s'écartent de l'élément tampon (24).

5. Elément de protection de pneu selon l'une des revendications 1 à 4, **caractérisé en ce que** l'élément tampon (24) comprend du matériau élastique.

6. Elément de protection de pneu selon l'une des revendications 1 à 5, **caractérisé en ce que** l'élément de protection de pneu (16) est fabriqué sous forme d'une bande sans fin pouvant être découpée à longueur.

7. Pneu de bicyclette avec une jante (10) et deux éléments de protection de pneu (16) selon l'une des revendications 1 à 6, attachés aux rebords de jante (12) de la jante (10), notamment enfichés sur les rebords de jante (12).
